(19) Europäisches Patentamt / European Patent Office / Office européen des brevets

(11) **EP 2 707 777 B1**

## (12) FASCICULE DE BREVET EUROPEEN

(45) Date de publication et mention
de la délivrance du brevet:
**07.08.2019 Bulletin 2019/32**

(21) Numéro de dépôt: **12719402.5**

(22) Date de dépôt: **09.05.2012**

(51) Int Cl.:
*G04B 17/06* *(2006.01)*    *G04B 17/22* *(2006.01)*

(86) Numéro de dépôt international:
**PCT/EP2012/058574**

(87) Numéro de publication internationale:
**WO 2012/152843 (15.11.2012 Gazette 2012/46)**

(54) **RESSORT SPIRAL EN SILICIUM POUR MONTRE MECANIQUE**

SILIZIUMSPIRALFEDER FÜR EINE MECHANISCHE UHR

SILICON SPIRAL SPRING FOR A MECHANICAL WATCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.05.2011 CH 784112011**

(43) Date de publication de la demande:
**19.03.2014 Bulletin 2014/12**

(73) Titulaire: **Lvmh Swiss Manufactures SA
2400 Le Locle (CH)**

(72) Inventeur: **CORTHESY, Yves
2300 La Chaux-de-Fonds (CH)**

(74) Mandataire: **P&TS SA (AG, Ltd.)
Av. J.-J. Rousseau 4
P.O. Box 2848
2001 Neuchâtel (CH)**

(56) Documents cités:
**EP-A1- 1 422 436    EP-A1- 2 151 722
EP-A1- 2 184 652    EP-A1- 2 407 831
CH-A2- 700 653**

**Description**

Domaine technique

La présente invention concerne un ressort spiral en silicium pour montre mécanique, notamment un ressort spiral en silicium pour organe régulateur d'une montre mécanique.

Etat de la technique

L'organe réglant des montres mécaniques est composé d'un balancier sur l'axe duquel est fixé un ressort appelé spiral ou ressort spiral, qui est une lame, généralement de section rectangulaire, enroulée sur elle-même en forme de spirale. La fixation du spiral à l'axe du balancier se fait par l'intermédiaire d'une virole. L'autre extrémité du spiral est fixée à la raquetterie ou à un pont par l'intermédiaire d'un piton.

Entre la virole et le piton, le spiral peut se déformer en fonction de divers facteurs, dont la température, la force de gravité, un champ magnétique, son propre poids, etc., ce qui nuit à l'isochronisme. Des oscillations isochrones sont des oscillations qui se produisent à des intervalles de temps égaux, de façon indépendante de leur amplitude et des facteurs mentionnés.

Un balancier donné couplé à un spiral donné oscille à une fréquence déterminée. Le nombre d'alternances par unité de temps détermine la résolution temporelle de l'organe régulateur. En augmentant la fréquence d'oscillation, la résolution temporelle est améliorée, ce qui permet de compter des intervalles de temps plus courts. Une résolution temporelle améliorée est par exemple utile pour des chronographes.

La fréquence f d'oscillation d'un organe réglant peut être déterminée par la formule suivante :

$$f = \frac{1}{2\pi}\sqrt{\frac{M}{I}} = \frac{1}{2\pi}\sqrt{\frac{1}{I} \cdot \frac{E \cdot h \cdot e^3}{12L}} \qquad [\text{Hz}] \qquad (1)$$

dans laquelle

- I est le moment d'inertie du balancier autour de son axe [kg · m²]
- M est le couple élastique du spiral [N · m]
- E est le module d'élasticité de la lame qui constitue le spiral [N · mm²]
- h est la hauteur de la lame [mm]
- e est l'épaisseur de la lame [mm]
- L est la longueur de la lame [mm].

Un spiral peut être réalisé en différents matériaux. Il a été constaté que l'utilisation du silicium présente des avantages, parce que le silicium est un matériau amagnétique et permet des coûts de fabrication faibles. Cependant son module de Young est fortement influencé par la température : son premier coefficient thermique est fortement négatif, en provoquant une dérive thermique incompatible avec les exigences horlogères.

Afin de compenser cette dérive, le document EP1422436, qui décrit un ressort spiral issu du découpage d'une plaque {001} de silicium, suggère de revêtir le spiral d'une couche de dioxyde de silicium $SiO_2$, dans la suite oxyde de silicium, dont le premier coefficient thermique est fortement positif. La présence du silicium et de son oxyde, dont les coefficients de température sont de signe opposé, permet de réduire les déformations du spiral causées par des variations de température. Cependant les déformations du spiral causées par d'autres déformations, par exemple celles causées par une variation d'inclinaison et de l'action de la gravité, ne sont pas réduites. En outre le ressort spiral décrit n'a pas une fréquence d'oscillation propre supérieure ou égale à 25 Hz.

En effet, pour obtenir une fréquence d'oscillation élevée, par exemple supérieure ou égale à 25 Hz, selon la formule (1) il est possible par exemple d'augmenter la hauteur h ou bien l'épaisseur e de la lame qui constitue le spiral. La réalisation d'un spiral épais en silicium nécessite cependant d'une épaisseur importante d'oxyde de silicium afin de compenser le coefficient thermique de la masse augmentée de silicium. Le rapport entre le volume de silicium et celui de son oxyde dans la pratique est d'environ 10%.

Il a été constaté dans le cadre de cette invention que l'épaisseur d'oxyde de silicium nécessaire à cette compensation devient donc non seulement nettement plus importante que l'épaisseur de la couche d'oxyde de silicium natif, qui se forme à cause du contact entre le silicium et l'oxygène de l'air, et dont l'épaisseur est de quelque nm seulement, mais aussi que l'épaisseur des couches d'oxyde de silicium obtenues par une méthode d'oxydation, par exemple une oxydation thermique ou anodique ou plasma, des spiraux connus.

En raison de l'augmentation du volume de l'oxyde de silicium à produire, le procédé pour recouvrir un spiral en silicium ayant une fréquence propre d'oscillation élevée, par exemple supérieure ou égale 25 Hz, de cette couche d'oxyde de silicium devient en conséquence extrêmement lent et peut durer une ou plusieurs semaines, ce qui n'est pas acceptable dans un contexte de production industrielle des spiraux. En outre la relation qui lie l'augmentation de la fréquence d'oscillation et l'épaisseur du spiral au temps requis pour obtenir une couche d'oxyde de silicium n'est pas linéaire. Par exemple en augmentant la fréquence d'oscillation d'un facteur 10, en gardant tous les paramètres de la formule (1) sauf l'épaisseur e, ce dernier doit augmenter environ d'un facteur 4,6, ce qui correspond à un temps de fabrication de la couche d'oxyde environ 20 fois plus grand.

Le document EP2151722 concerne un spiral pour résonateur balancier spiral qui comprend quatre lames afin de rendre ses oscillations isochrones. Le spiral est thermo-compensé à l'aide d'une couche d'oxyde de silicium. Deux lames sont disposées entre la virole et un anneau intermédiaire et les autres deux lames entre l'anneau et un anneau de fixation. L'anneau intermédiaire peut être évidé avec une dizaine de trous afin de réduire sa masse.

Le document CH700653 concerne un ressort spiral en silicium qui peut présenter une couche d'oxyde de silicium. La spire extérieure comporte une portion divisée en deux lames, définissant une ouverture destinée à recevoir un organe de réglage dont la position est mobile par rapport à l'ouverture. La dernière spire peut comporter aussi une deuxième portion comprenant deux brins reliés de manière rigide par des poutres de liaison, qui définissent quatre trous afin de ramener le centre d'action du spiral en correspondance avec le centre du balancier, afin de corriger le spiral de son développement non concentrique.

Le document EP2184652 concerne un spiral à élévation de courbe en silicium qui peut présenter une couche d'oxyde de silicium. Le spiral comprend une courbe terminale et un dispositif d'élévation entre la spire externe du ressort et cette courbe terminale afin d'améliorer la concentricité du développement du ressort.

Le document EP2407831 concerne un ressort spiral en silicium qui présente des ajours pour diminuer sa masse tout en gardant une rigidité équivalente à celle d'un spiral massif.

Il existe donc un besoin pour un spiral en silicium revêtu d'une couche d'oxyde de silicium qui puisse osciller à une fréquence supérieure ou égale à 25 Hz, de préférence supérieure ou égale à 50 Hz, et qui puisse être fabriqué rapidement, c'est-à-dire dans un délai sensiblement plus petit qu'une semaine, par exemple dans un délai de l'ordre de grandeur de quelques dizaines d'heures.

Il existe aussi un besoin d'un spiral en silicium revêtu d'une couche d'oxyde de silicium qui puisse être suffisamment raide pour pouvoir osciller à une fréquence égale ou supérieure à 25 Hz, de préférence égale ou supérieure à 50 Hz.

Bref résumé de l'invention

Un but de la présente invention est de proposer un ressort spiral en silicium pour montre mécanique exempt des limitations des ressorts spiraux en silicium connus.

Un autre but de l'invention est de proposer un spiral en silicium revêtu d'une couche d'oxyde de silicium qui puisse osciller à une fréquence supérieure ou égale à 25 Hz, de préférence égale ou supérieure à 50 Hz, et qui puisse être fabriqué rapidement.

Selon l'invention, ces buts sont atteints notamment au moyen d'un ressort spiral en silicium, au moyen d'une montre mécanique et au moyen d'un procédé de fabrication d'un ressort spiral en silicium selon les revendications ci-dessous.

Le ressort spiral en silicium pour montre mécanique selon l'invention comprend un nombre de trous supérieur à 500, par exemple entre 800 et 1600, de préférence supérieur à 1000.

L'utilisation d'un nombre de trous importants, et donc d'un nombre important de ponts séparant chaque paire de trous, permet d'une part d'augmenter la surface oxydable, d'autre part de conserver une rigidité importante en limitant le risque que la face interne de chaque spire vibre avec un autre mode que la face externe.

Afin d'obtenir ce nombre de trous importants, le pas angulaire entre deux trous est de préférence inférieur à 5 degrés, de préférence entre 1° et 4°. Dans un mode de réalisation, le spiral comporte plus de 800 trous séparés les uns des autres par un pas inférieur à 5°. Dans un mode de réalisation préférentiel, le spiral comporte plus de 1000 trous séparés les uns des autres par un pas inférieur à 4°.

L'espacement angulaire entre chaque trou et le trou voisin le plus proche est avantageusement constant.

Dans un mode de réalisation, toutes les spires sont munies de trous, à l'exception de la courbe terminale éventuelle.

Dans un mode de réalisation, toutes les spires à l'exception de la courbe terminale éventuelle sont munies de trous répartis sur toute la longueur de chaque spire.

Dans un mode de réalisation, au moins une spire, ou toutes les spires à l'exception de la courbe terminale éventuelle, sont munies de trous répartis sur une portion de chaque spire inférieure à la longueur de cette spire ; une portion d'au moins une spire et donc dépourvue de trous.

Les trous peuvent être de section circulaire.

Le ressort spiral en silicium pour montre mécanique selon l'invention comprend une lame en silicium enroulée sur elle-même en forme de spirale, la lame comprenant une surface, dite oxydable, en contact avec l'air. La lame est conformée de sorte que l'aire de la surface oxydable est au moins égale à 1,1 fois l'aire d'une enveloppe convexe rectiligne de la lame, de préférence au moins égale à 1,5 fois l'aire de l'enveloppe convexe rectiligne.

On entend par enveloppe convexe rectiligne, l'enveloppe convexe qu'aurait la lame dans une configuration rectiligne, c'est-à-dire non-enroulée en spirale. Cette enveloppe convexe rectiligne permet de caractériser la surface apparente et la forme générale du spiral, sans tenir compte de ses éventuelles irrégularités ou anfractuosités de surface.

La « surface oxydable » de la lame est la surface du spiral qui peut être oxydée, donc la surface externe du spiral, c'est-à-dire celle qui peut entrer en contact avec de l'oxygène. Chaque irrégularité du spiral forme une surface qui peut être oxydée. Ainsi, la surface oxydable du spiral caractérise avec précision la forme spécifique du spiral, en tenant compte de chaque détail de surface.

Un ressort spiral classique de l'état de la technique présente une forme régulière de spirale, généralement de section rectangulaire. Sa surface ne présente presque pas d'irrégularités mais un aspect lisse. Ainsi, s'il était déroulé, sa surface oxydable, de forme parallélépipédique, coïnciderait sensiblement avec son enveloppe convexe rectiligne et leurs aires seraient confondues.

Comme discuté ci-dessus, l'oxydation d'un spiral en silicium dans ce contexte sert pour compenser le coefficient thermique du silicium : la couche d'oxyde de silicium natif, qui se forme à cause du contact entre le silicium et l'oxygène de l'air, et dont l'épaisseur est de quelque nm seulement, n'est pas suffisante à garantir cette compensation. Donc, dans le contexte de l'invention, la surface oxydable du spiral sera oxydée avec une oxydation thermique ou anodique ou plasma, afin de créer une épaisseur des couches d'oxyde de silicium supérieure à l'épaisseur de la couche d'oxyde de silicium natif, pour compenser thermiquement le silicium du spiral.

Grâce à l'invention, pour une forme générale du ressort spiral donnée (c'est-à-dire pour une aire de l'enveloppe convexe rectiligne donnée), l'aire de la surface oxydable du ressort spiral est accrue d'au moins 10% ou plus. Ainsi, la quantité d'oxyde de silicium portée par le ressort spiral est également accrue. Donc cela permet de réduire le temps d'oxydation nécessaire à l'obtention d'une quantité d'oxyde de silicium voulue.

Avantageusement, la surface oxydable comprend au moins une portion non planaire par exemple une portion ondulée, en créneau, en dents de scie, ou une portion comprenant des irrégularités telles que des trous ou des rainures. L'expression « non planaire » dans ce contexte indique que la surface oxydée n'appartient pas à un seul plan, mais à différents plans qui peuvent avoir différentes inclinaisons l'un par rapport à l'autre, par exemple ils peuvent aussi être perpendiculaires. Les différents plans peuvent être aussi l'un parallèle à l'autre. Le fait d'avoir une surface non planaire permet d'augmenter la surface oxydable du ressort, pour une forme générale donnée, c'est-à-dire pour une enveloppe convexe rectiligne donnée.

Dans une variante préférentielle la lame est conformée de sorte que la surface oxydée comprend deux surfaces latérales, une surface inférieure et une surface supérieure, et une pluralité de trous traversants et/ou borgnes, débouchants sur l'une ou plusieurs des surfaces latérales, inférieure et supérieure.

Dans un mode de réalisation le spiral comporte des trous borgnes sur sa surface supérieure et des trous borgnes sur sa surface inférieure. Le spiral peut par exemple comporter en alternance des trous borgnes sur les faces supérieures et inférieures, ce qui permet de maintenir une rigidité optimale et une symétrie entre les faces supérieures et inférieures qui vont se déformer selon les mêmes modes de déformation.

Les trous dans une variante peuvent appartenir et déboucher au moins à la surface supérieure du ressort spiral, c'est-à-dire à la tranche du ressort spiral visible par le haut. L'embouchure de ces trous constitue au moins le 80% de cette surface supérieure. Dans une autre variante les trous appartiennent non seulement à la surface supérieure du ressort spiral, mais aussi à sa surface inférieure, qui généralement est parallèle à celle supérieure, et à des surfaces sensiblement perpendiculaires à celle supérieure et inférieure. Dans une autre variante les trous peuvent appartenir au moins aux surfaces latérales du ressort spiral, c'est-à-dire ses flancs, bien que cela soit plus difficile à fabriquer et risque de créer des amorces de rupture.

Selon l'invention, le nombre de trous est tel que la surface oxydable du ressort comprenant ces trous a une aire au moins égale à 1,1 fois, de préférence 1,5 fois, l'aire de la surface oxydable du même ressort s'il était dépourvu de ces trous. En d'autres termes, le nombre de trous est déterminé de manière à augmenter d'au moins 10% la surface oxydable du ressort par rapport à un ressort sans trous.

Dans une variante les trous sont répartis périodiquement sur la surface supérieure de la lame, c'est-à-dire qu'ils se répètent à intervalles réguliers, ce qui favorise la production d'une couche d'oxyde régulière ou en tout cas périodique. Dans une variante les trous ne sont pas périodiques.

Dans une variante préférentielle les trous sont réalisés au même temps que la réalisation du spiral 1, c'est-à-dire de son découpage dans une plaque de silicium, par exemple par photolithographie et gravure. Les trous peuvent être aussi réalisés après la fabrication d'un spiral, par photolithographie et gravure et/ou par laser. La gravure peut être une gravure DRIE (Deep Reactive-Ion Etching).

La présence de ces trous permet une diminution de masse du spiral, tout en gardant sa raideur, ce qui permet d'augmenter la fréquence propre d'oscillation du spiral afin d'éliminer les modes vibratoires parasites. En outre la diminution de masse du spiral pour une même raideur permet aussi d'augmenter la fréquence d'oscillation de l'ensemble spiral-balancier. En effet les trous sont réalisés dans la fibre neutre du spiral, c'est-à-dire la partie du spiral qui est soumise à un nombre inférieur de contraintes lors de l'oscillation du spiral. La diminution de masse permet aussi de concentrer une plus grande partie de l'inertie dans la serge du balancier, en améliorant la fonction de volant d'inertie du balancier.

Avantageusement les trous permettent d'augmenter la surface qui s'oxyde : la couche d'oxyde de silicium à déposer afin de réduire les déformations du spiral causées par des variations de température sera donc moins épaisse, ce qui permet de maintenir un temps de fabrication du spiral raisonnable, de l'ordre de grandeur de quelques dizaines d'heures, par exemple 30 heures.

Dans une variante préférentielle les trous sont traversants, c'est-à-dire chaque trou est une perforation qui traverse en entier le spiral de silicium. L'utilisation de trous traversants permet une fabrication plus simple et une surface d'oxydation encore augmentée, au prix d'une raideur légèrement réduite. Dans une autre variante les trous sont borgnes, ce qui permet de maintenir une raideur élevée au prix d'une surface d'oxydation sensiblement réduite par rapport à l'utilisation de trous traversants.

Dans une variante préférentielle les trous ont une forme oblongue, ont tous la même dimension et sont répartis de façon périodique, c'est-à-dire espacés par un pas régulier. Cette disposition permet de maintenir la raideur du spiral presque intacte, tout en l'allégeant; il se déforme donc moins sous l'influence de la gravité. Dans une autre variante le pas entre les trous n'est pas régulier.

Les trous peuvent être sensiblement alignés et/ou centrés par rapport à la surface à laquelle ils appartiennent, afin d'éviter des modes vibratoires parasites qui pourraient être causés au cas où les trous sépareraient le spiral en deux bandes fines oscillant indépendamment l'une de l'autre. En outre leurs dimensions sont aussi définies par des calculs précis et déterminées par un compromis : en effet des trous plus grands permettent de diminuer la masse du spiral, avec les avantages mentionnées plus en haut, et d'accélérer son oxydation ; par contre si la longueur de chaque trou est supérieure à un seuil prédéterminé, le spiral se comporte comme une suite de paires de spiraux d'épaisseur très inférieure et sa raideur diminue très fortement. En outre si la distance entre deux trous consécutifs est inférieure à un seuil prédéterminé, le spiral risque de se casser. En général l'épaisseur de chaque trou par rapport à celui du spiral, la longueur de chaque trou et la distance entre deux trous consécutifs sont des paramètres à définir lors de la conception du spiral, afin qu'il ait le mode d'oscillation désiré.

Le silicium utilisé pour fabriquer le spiral selon l'invention est en effet un silicium massif, c'est-à-dire non poreux, et avantageusement a une orientation du type {111}, qui présente des propriétés mécaniques sensiblement identiques sur tous les axes, à différence de l'orientation du type {100} qui n'est pas isotrope. En outre l'orientation du type {111} présente des plans avec plus d'atomes par rapport à une orientation du type {100}, ce qui permet une oxydation plus rapide du silicium.

Dans une variante les trous sont en nombre supérieur à 1000, par exemple 1300.

Selon un aspect, l'invention concerne aussi un ressort spiral en silicium pour montre mécanique comprenant des trous 10 traversants et/ou borgnes, lesdits trous 10 définissant des premières surfaces 100, 102, 104, lesdites premières surfaces 100, 102, 104 constituant au moins le 20% de la surface oxydable dudit ressort (1).

Le ressort spiral en silicium peut comprendre une lame en silicium enroulée sur elle-même, ladite lame comprend deux flancs 30, 32, une surface inférieure 40 et une surface supérieure 42, chacun desdits deux flancs 30, 32 et/ou ladite surface inférieure 40 et/ou ladite surface supérieure 42 comprenant une surface oxydée non planaire 14.

Lesdits trous 10 peuvent appartenir au moins à la surface supérieure 42 dudit ressort spiral 1.

Lesdits trous peuvent appartenir au moins au 80% de ladite surface supérieure 42 dudit ressort spiral 1.

Lesdits trous 10 peuvent être disposés de manière périodique.

L'invention concerne aussi un procédé de fabrication d'un ressort spiral en silicium 1 pour montre mécanique selon la revendication 15.

Brève description des figures

Des exemples de mise en oeuvre de l'invention sont indiqués dans la description illustrée par les figures annexées dans lesquelles :

La figure 1 illustre une vue par le haut d'un mode de réalisation du ressort spiral selon l'invention.

La figure 2 illustre un détail de la figure 1.

La figure 3 illustre une vue en perspective du ressort spiral de la figure 1.

La figure 4 illustre une vue de coupe d'un mode de réalisation du ressort spiral selon l'invention.

La figure 5 illustre une vue de coupe d'un autre mode de réalisation du ressort spiral selon l'invention.

La figure 6 illustre une vue de coupe d'un autre mode de réalisation du ressort spiral selon l'invention.

La figure 7 illustre une vue de coupe d'un autre mode de réalisation du ressort spiral selon l'invention.

Exemple(s) de mode(s) de réalisation de l'invention

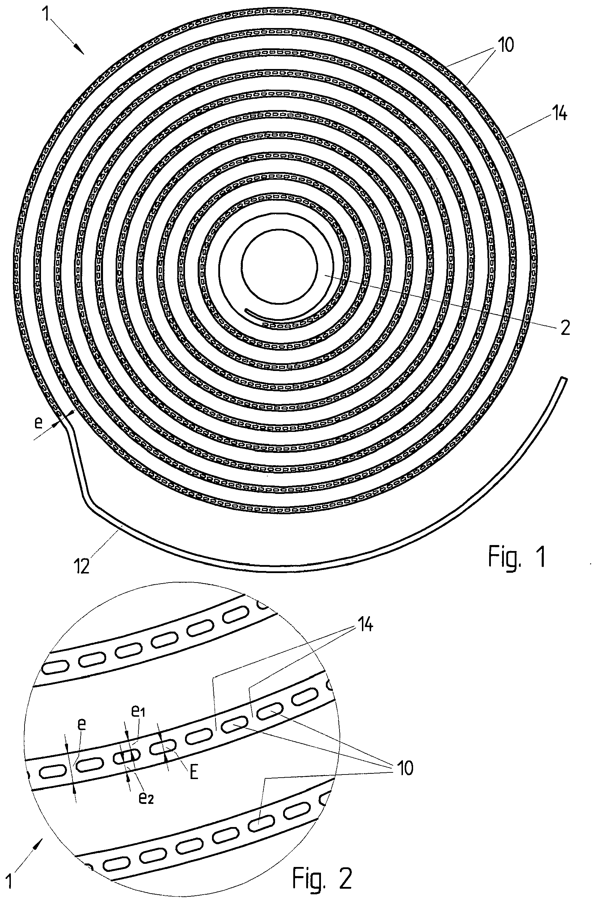

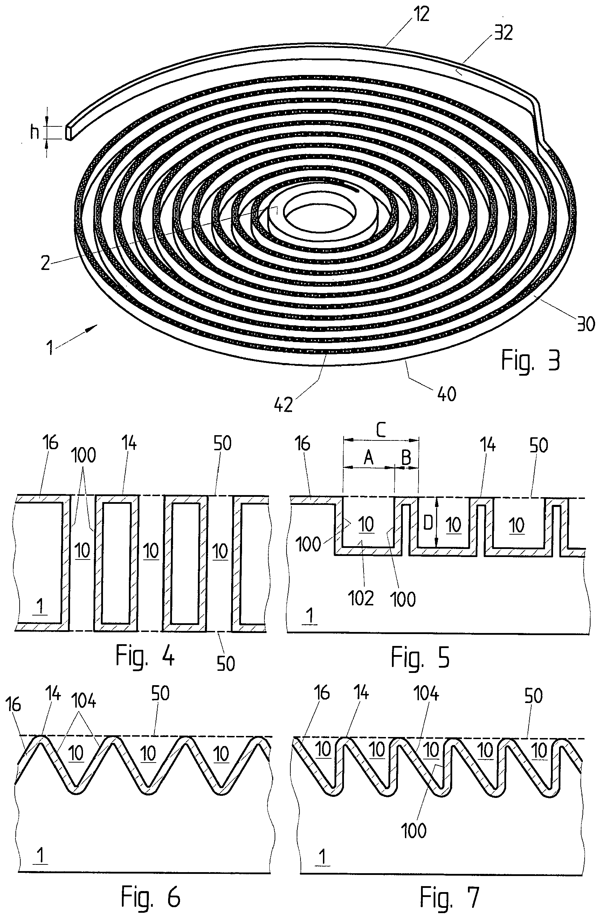

Les figures 1 et 3 illustrent respectivement une vue par le haut et une vue en perspective d'un ressort spiral 1 selon l'invention.

Le ressort spiral 1 comprend une lame en silicium enroulée sur elle-même, de section généralement rectangulaire. Cette lame comprend deux surfaces latérales, ou flancs 30, 32, une surface inférieure 40 et une surface supérieure 42, visibles sur la figure 3. Avantageusement chacun des deux flancs 30, 32 et/ou la surface inférieure 40 et/ou la surface supérieure 42 peuvent comprendre une surface oxydée non planaire 14, c'est-à-dire que l'une ou plusieurs des surfaces latérales, inférieure et supérieure ne sont pas planes et lisse comme dans un ressort classique.

La surface oxydée est non planaire parce que le spiral 1 comprend des irrégularités, qui, selon un premier mode de réalisation, sont des trous 10 comme dans l'exemple des figures 1 et 3. Ces trous 10 peuvent être traversants ou borgnes.

Dans l'exemple illustré sur la figure 4, les trous 10 sont traversants et chaque trou 10 définit deux premières surfaces 100, qui sont sensiblement verticales, c'est-à-dire sensiblement perpendiculaires par rapport au plan qui contient le spiral 1. L'adverbe « sensiblement » indique que des petites tolérances, de l'ordre de grandeur de quelques dégrées par rapport à la perpendiculaire au plan du spiral 1, peuvent être acceptées.

Dans l'exemple illustré sur la figure 5 chaque trou 10 est borgne, et définit deux premières surfaces 100, qui sont sensiblement verticales, et une première surface 102 qui est sensiblement horizontale, c'est à-dire sensiblement perpendiculaire aux premières surfaces 100.

Si les trous 10 sont traversants, leur fabrication est plus simple et la surface d'oxydation est encore augmentée, parce que la surface oxydée n'appartient pas à un seul plan, mais à différents plans qui peuvent avoir différentes inclinaisons l'un par rapport à l'autre, par exemple les plans des parois des trous 10 peuvent être perpendiculaires à la surface supérieure et à celle inférieure du ressort spiral 1. Dans une autre variante les trous sont borgnes, ce qui permet de maintenir une raideur un peu plus élevée au prix d'une surface d'oxydation des parois des trous réduite par rapport à l'utilisation de trous traversants ; cependant il y a aussi la surface du fond de chaque trou.

Les trous appartiennent au moins à la surface supérieure 42 du ressort spiral 1, c'est-à-dire à la surface du ressort spiral visible par le haut, par exemple celle visible sur la figure 1. Dans une variante préférentielle l'embouchure des trous représentent au moins 80% de la surface supérieure 32 du ressort spiral 1.

Les trous, traversants ou borgnes, dans une variante préférentielle sont fabriqués par photolithographie et gravure, directement lors de la fabrication du ressort spiral en silicium à partir d'un wafer. Dans une autre variante ils sont fabriqués après la réalisation du silicium, par photolithographie et gravure ou par laser.

Dans le cas d'un spiral comportant des trous traversants entre les deux surfaces 40, 42, ou des trous borgnes sur une ou sur les deux surfaces inférieures 40 et/ou supérieures 42, une surface inférieure non planaire peut aussi être envisagée. Par ailleurs, il est aussi envisageable de favoriser l'oxydation au moyen de surfaces latérales 30, 32 munies de trous ou d'aspérités, bien que cela soit plus difficile à fabriquer et risque de créer des amorces de rupture.

Dans une variante les trous 10 sont répartis de manière périodique. Des exemples sont visibles sur les figures 1 à 5, sur lesquelles la référence 16 indique la couche d'oxyde de silicium.

Dans la variante illustrée sur les figures 1 à 5 la surface oxydée non planaire 14 forme des trous 10, qui dans le cas de la figure 4 sont traversants, dans le cas de la figure 5 borgnes. Les trous sont généralement réalisés dans la fibre neutre du spiral. Comme mentionné, la présence de ces trous 10 permet une diminution de masse du spiral à parité de raideur, ce qui permet d'augmenter la fréquence propre d'oscillation du spiral afin d'éliminer les modes vibratoires parasites, de diminuer l'influence de la gravité sur le spiral et de concentrer une plus grande partie de l'inertie dans la serge du balancier. La forme et la disposition des trous est cependant choisie de façon à maintenir la raideur du spiral, ce qui lui permet d'osciller à fréquence élevée et d'être moins sensible à la gravitation.

Au lieu des trous de section sensiblement rectangulaire ou carrée, il est possible, selon un second mode de réalisation de l'invention, d'avoir sur la surface 14 toute autre sorte d'irrégularités qui la rendent non planaire, par exemple celles illustrées sur les figures 6 et 7, où les irrégularités de surface sont des ondulations, des rainures ou des cavités qui ont par exemple une section triangulaire. Des irrégularités traversantes peuvent aussi être envisagées. Ces irrégularités doivent permettre une réduction de la masse du spiral par rapport à un spiral dépourvu de ces irrégularités et une augmentation d'au moins 10% de la surface oxydée.

Comme mentionné, la présence de ces irrégularités 10 permet d'augmenter la surface à oxyder : la couche d'oxyde de silicium à déposer afin de réduire les déformations du spiral causées par des variations de température sera en conséquence moins épaisse, ce qui permet de maintenir un temps de fabrication du spiral raisonnable, de l'ordre de grandeur de quelques dizaines d'heures, par exemple 30 heures.

Dans l'exemple illustré sur la figure 6 chaque cavité 10 est borgne, et définit deux premières surfaces 104, qui sont inclinées par rapport à un axe perpendiculaire au plan du spiral 1. La surface 104 forme par exemple un angle qui est supérieur à 10° par rapport à l'axe perpendiculaire au plan du spiral 1.

Dans l'exemple illustré sur la figure 7 chaque cavité 10 est borgne, et définit une première surface 100 sensiblement verticale et une première surface 104 inclinée. Chaque trou 10 peut définir toute autre combinaison de premières surfaces 100, 102, 104 : par exemple, selon une variante qui n'est pas illustrée, un trou 10 borgne peut définir une surface sensiblement verticale 100, une surface sensiblement horizontale 102 et une surface inclinée 104.

Dans la variante illustrée sur les figures 1 à 5, les trous ont une forme oblongue, ont tous la même dimension et sont espacés par un pas B régulier, visible sur la figure 5. Ils sont sensiblement alignés et/ou centrés par rapport à la surface à laquelle ils appartiennent, comme visible sur la figure 2, afin d'éviter des modes vibratoires parasites causés par leur disposition non alignée et/ou non centrée. En général ils sont réalisés sensiblement dans la fibre neutre du spiral 1. En outre leurs dimensions sont aussi définies par des calculs précis et déterminées par un compromis : en effet des trous plus grands permettent de diminuer la masse du spiral, avec les avantages mentionnées plus en haut, et d'accélérer son oxydation ; par contre si la longueur de chaque trou A est supérieure à un seuil prédéterminé, le spiral se comporte comme une suite de deux spiraux parallèles reliés par des attaches, ce qui change entièrement le mode vibratoire du spiral.

En outre si la distance entre deux trous consécutifs B est inférieure à un seuil prédéterminé, le spiral risque de se casser. En général l'épaisseur E de chaque trou, visible sur la figure 2, par rapport à l'épaisseur e du spiral ou en d'autres termes les épaisseurs $e_1$ et $e_2$ du spiral sur les côtes de chaque trou, la longueur A de chaque trou et la distance B entre deux trous consécutifs sont des paramètres à définir lors de la conception du spiral, afin qu'il ait un mode d'oscillation aussi proche que possible de celui d'un spiral sans trous. Les trous terminés par des rayons proportionnellement importants évitent des amorces de rupture.

Le silicium utilisé pour fabriquer le spiral selon l'invention est un silicium massif, c'est-à-dire non poreux, et avantageusement a une orientation du type {111} qui est isotrope et permet une oxydation plus rapide du silicium qu'une orientation du type {100}.

Dans une variante les trous sont en nombre supérieur à 1000, par exemple 1300.

La fixation du ressort spiral 1 à l'axe du balancier se fait par l'intermédiaire d'une virole 2, visible sur les figures 1 et 3. La virole peut être intégrée au spiral afin d'être fixée, par exemple collée ou rivée, sur l'axe du balancier, ou éventuellement constituer une pièce distincte. Elle peut présenter des trous afin de favoriser son oxydation en profondeur et de minimiser les déformations dues à la température. Elle peut aussi être dépourvue de trous comme sur la figure 3 afin d'être plus solide.

Le ressort spiral 1 a une fréquence d'oscillation propre supérieure ou égale à 25 Hz, de préférence égale ou supérieure à 50 Hz. Cette fréquence est obtenue en agissant sur les valeurs des dimensions géométrique du ressort spiral, par exemple sa hauteur h et son épaisseur e, selon la formule (1). Dans une variante le ressort spiral a une hauteur h supérieure ou égale à 100 $\mu$m, par exemple 150 $\mu$m et/ou une épaisseur e supérieure ou égale à 30 $\mu$m. Dans une variante préférentielle l'épaisseur e est deux fois celle d'un ressort spiral conventionnel, par exemple e est supérieur à 50 $\mu$m, de préférence supérieur à 65 $\mu$m.

Le ressort spiral 1 peut comprendre, comme illustré sur les figures 1 et 3, une courbe terminale 12, ou toute autre courbe qui permette au centre de gravité du spiral de se trouver au centre du spiral, c'est-à-dire sur l'axe du balancier, tout au long de l'oscillation. Cette courbe terminale peut être dépourvue de trous, comme sur les figures 1 et 3. Dans une variante cette courbe terminale est également munie de trous.

Dans tous les modes de réalisation de l'invention, l'aire de la surface oxydable du ressort est supérieure d'au moins 10% à l'aire de l'enveloppe convexe rectiligne du ressort, c'est-à-dire à l'aire d'un ressort de forme et de taille similaire mais ne comportant ni trous ni irrégularités de surface. L'aire de l'enveloppe convexe rectiligne est aisée à déterminer car le ressort spiral conserve une forme générale classique dont l'aire de la section moyenne et la longueur sont mesurables.

L'invention concerne aussi une montre mécanique comportant un ressort spiral tel que décrit et un procédé de fabrication d'un ressort spiral en silicium pour montre mécanique comprenant les étapes suivantes :

- réalisation d'une lame en silicium enroulée sur elle-même en forme de spirale, la lame comprenant une surface, dite oxydable, en contact avec l'air, la lame étant conformée de sorte que l'aire de la surface oxydable est au moins égale à 1,1 fois l'aire d'une enveloppe convexe rectiligne de la lame, de préférence au moins égale à 1,5 fois l'aire de l'enveloppe convexe rectiligne,
- oxydation de la surface oxydable.

La surface oxydable est obtenue par réalisation de trous traversants et/ou borgnes dans une surface plane de la lame, de préférence dans une surface supérieure de la lame.

Dans une variante préférentielle les trous sont réalisés en même temps que la réalisation du spiral 1, c'est-à-dire de son découpage dans une plaque de silicium, par exemple par photolithographie et gravure DRIE.

Les trous 10 peuvent être aussi réalisés après la fabrication d'un spiral, par photolithographie et gravure et/ou par laser.

L'oxydation du spiral 1 peut être thermique ou anodique ou plasma. L'oxydation thermique permet des coûts de fabrications réduits. Elle est de préférence humide pour augmenter encore plus la vitesse d'oxydation.

**Numéros de référence employés sur les figures**

| | |
|---|---|
| 1 | Ressort spiral |
| 10 | Trou |
| 12 | Courbe terminale |
| 14 | Surface supérieure du ressort spiral |
| 16 | Couche d'oxyde de silicium |
| 2 | Virole |
| 30 | Premier flanc du spiral |
| 32 | Deuxième flanc du spiral |
| 40 | Surface inférieure du spiral |
| 42 | Surface supérieure du spiral |
| 50 | Enveloppe convexe rectiligne du spiral |
| 100 | Première surface sensiblement verticale |
| 102 | Première surface sensiblement horizontale |
| 104 | Première surface sensiblement inclinée ou non verticale |
| e | Epaisseur du spiral |
| h | Hauteur du spiral |
| A | Largeur d'un trou |
| B | Espace entre deux trous |
| C | Distance entre deux trous |
| D | Hauteur d'un trou |
| E | Epaisseur d'un trou |
| $e_1$ | Epaisseur du spiral le long d'un premier côté d'un trou |
| $e_2$ | Epaisseur du spiral le long d'un deuxième côté d'un trou |

**Revendications**

1. Ressort spiral en silicium (1) pour montre mécanique comprenant des trous (10) traversants et/ou borgnes, le nombre desdits trous (10) étant supérieur à 500, ledit ressort spiral en silicium (1) ayant une hauteur (h) supérieure ou égale à 100 $\mu$m.

2. Le ressort spiral selon la revendication 1, le nombre desdits trous (10) étant supérieur à 1000.

3. Le ressort spiral selon l'une des revendications 1 ou 2, la surface latérale desdits trous étant sensiblement perpendiculaire à l'embouchure desdits trous.

4. Le ressort spiral selon l'une des revendications 1 ou 2, la surface latérale desdits trous étant non perpendiculaire à l'embouchure desdits trous.

5. Le ressort spiral selon l'une des revendications 1 à 4, le ressort comprenant une lame en silicium enroulée sur elle-même en forme de spirale, la lame comprenant une surface, dite surface oxydable, en contact avec l'air, **caractérisé en ce que** la lame est conformée de sorte que l'aire de la surface oxydable est au moins égale à 1,1 fois l'aire d'une enveloppe convexe rectiligne (50) de la lame, de préférence au moins égale à 1,5 fois l'aire de l'enveloppe convexe rectiligne.

**6.** Le ressort spiral selon l'une des revendications 1 à 5, comprenant une lame en silicium enroulée sur elle-même, ladite lame comprend deux flancs (30, 32), une surface inférieure (40) et une surface supérieure (42), chacun desdits deux surfaces latérales (30, 32) et/ou ladite surface inférieure (40) et/ou ladite surface supérieure (42) comprenant une surface oxydée non planaire (14).

**7.** Le ressort spiral selon l'une des revendications 1 à 6, l'embouchure desdits trous (10) appartenant au moins à la surface supérieure (42) dudit ressort spiral (1).

**8.** Le ressort spiral selon l'une des revendications 1 à 7, lesdits trous (10) étant disposés de manière périodique.

**9.** Le ressort spiral selon l'une des revendications 1 à 8, ledit silicium étant un silicium ayant une orientation du type {111}.

**10.** Le ressort spiral selon l'une des revendications 1 à 9, ledit silicium étant un silicium massif.

**11.** Le ressort spiral selon l'une des revendications 1 à 10, lesdits trous (10) étant sensiblement alignés.

**12.** Le ressort spiral selon l'une des revendications 1 à 11, chacun desdits trous (10) ayant une forme oblongue.

**13.** Le ressort spiral selon l'une des revendications 1 à 12, ayant une épaisseur (e) supérieure ou égale à 30 $\mu$m.

**14.** Montre mécanique comportant un ressort spiral (1) selon l'une des revendications 1 à 13.

**15.** Procédé de fabrication d'un ressort spiral en silicium (1) pour montre mécanique **caractérisé en ce qu'**il comprend les étapes suivantes :

- réalisation dans le ressort spiral en silicium (1) de trous (10) traversants et/ou borgnes, le nombre desdits trous (10) étant supérieur à 500, de préférence supérieure à 1000, ledit ressort spiral en silicium (1) ayant une hauteur (h) supérieure ou égale à 100 $\mu$m,
- oxydation dudit ressort (1).

**16.** Le procédé selon la revendication 15, lesdits trous (10) étant réalisés par photolithographie et gravure lors de la réalisation dudit ressort spiral (1).

**17.** Le procédé selon la revendication 15, lesdits trous (10) étant réalisés par photolithographie et gravure et/ou par laser après la réalisation dudit ressort spiral (1).

**18.** Le procédé selon l'une des revendications 15 à 17, ladite oxydation de ladite surface (14) étant thermique ou anodique ou plasma.

**19.** Le procédé selon l'une des revendications 15 à 18, comprenant les étapes suivantes

- réalisation d'une lame en silicium enroulée sur elle-même en forme de spirale, la lame comprenant une surface, dite oxydable, en contact avec l'air, la lame étant conformée de sorte que l'aire de la surface oxydable est au moins égale à 1,1 fois l'aire d'une enveloppe convexe rectiligne de la lame, de préférence au moins égale à 1,5 fois l'aire de l'enveloppe convexe rectiligne,
- oxydation de la surface oxydable (1).

**Patentansprüche**

**1.** Siliziumspiralfeder (1) für eine mechanische Uhr mit Durchgangslöchern und/oder Sacklöchern (10), wobei die Anzahl der besagten Löcher (10) grösser als 500 ist, wobei die besagte Siliziumspiralfeder (1) eine Höhe (h) grösser als oder gleich 100 $\mu$m aufweist.

**2.** Spiralfeder gemäss Anspruch 1, wobei die Anzahl der besagten Löcher (10) grösser als 1000 ist.

**3.** Spiralfeder gemäss einem der Ansprüche 1 oder 2, wobei die seitliche Oberfläche der besagten Löcher im Wesentlichen senkrecht zur Mündung der besagten Löcher ist.

**4.** Spiralfeder gemäss einem der Ansprüche 1 oder 2, wobei die seitliche Oberfläche der besagten Löcher nicht senkrecht zur Mündung der besagten Löcher ist.

**5.** Spiralfeder gemäss einem der Ansprüche 1 bis 4, wobei die Feder Federblatt aus Silizium umfasst, das in Form einer Spirale um sich gewickelt ist, wobei das Federblatt eine Oberfläche umfasst, sogenannte oxidierbare Oberfläche, in Kontakt mit der Luft, **dadurch gekennzeichnet, dass** das Federblatt so geformt ist, dass die Fläche der oxidierbaren Oberfläche mindestens dem 1,1-fachen der Fläche einer geradlinigen konvexen Hülle (50) des Federblatts entspricht, vorzugsweise mindestens dem 1,5-fachen der Fläche der geradlinigen konvexen Hülle.

**6.** Spiralfeder gemäss einem der Ansprüche 1 bis 5, umfassend ein auf sich selbst gewickeltes Federblatt aus Silizium, wobei das besagte Federblatt zwei Seitenwände (30, 32), eine untere Fläche (40) und eine obere Fläche (42) aufweist, wobei die beiden besagten Seitenflächen (30, 32) und/oder die besagte untere Fläche (40) und/oder die besagte obere Fläche (42) eine nicht planare oxidierte Fläche (14) umfassen.

**7.** Spiralfeder gemäss einem der Ansprüche 1 bis 6, wobei die Mündung der besagten Löcher (10) mindestens zur oberen Oberfläche (42) der besagten Spiralfeder (1) gehört.

**8.** Spiralfeder gemäss einem der Ansprüche 1 bis 7, wobei die besagten Löcher (10) periodisch angeordnet sind.

**9.** Spiralfeder gemäss einem der Ansprüche 1 bis 8, wobei das besagte Silizium ein Silizium ist, welches eine Orientierung des Typs {111} aufweist.

**10.** Spiralfeder gemäss einem der Ansprüche 1 bis 9, wobei das besagte Silizium ein festes Silizium ist.

**11.** Spiralfeder gemäss einem der Ansprüche 1 bis 10, wobei die besagten Löcher (10) im Wesentlichen ausgerichtet sind.

**12.** Spiralfeder gemäss einem der Ansprüche 1 bis 11, wobei jedes der besagten Löcher (10) eine längliche Form aufweist.

**13.** Spiralfeder gemäss einem der Ansprüche 1 bis 12 mit einer Dicke (e) grösser als oder gleich 30$\mu$m.

**14.** Mechanische Uhr mit einer Spiralfeder (1) gemäss einem der Ansprüche 1 bis 13.

**15.** Verfahren zum Herstellen einer Spiralfeder (1) aus Silizium für eine mechanische Uhr, **dadurch gekennzeichnet, dass** es die folgenden Schritte umfasst:

- Herstellen von Durchgangslöchern und/oder Sacklöchern (10) in der Spiralfeder (1) aus Silizium, wobei die Anzahl der besagten Löcher (10) grösser als 500, vorzugsweise grösser als 1000, ist, wobei die besagte Spiralfeder (1) aus Silizium eine Höhe (h) grösser als oder gleich 100$\mu$m aufweist,
- Oxidation der besagten Feder (1).

**16.** Verfahren gemäss Anspruch 15, wobei die besagten Löcher (10) durch Photolithographie und Ätzen während der Herstellung der besagten Spiralfeder (1) hergestellt werden.

**17.** Verfahren gemäss Anspruch 15, wobei die besagten Löcher (10) durch Photolithographie und Ätzen und/oder Laser nach der Herstellung der besagten Spiralfeder (1) hergestellt werden.

**18.** Verfahren gemäss einem der Ansprüche 15 bis 18, wobei die besagte Oxidation der besagten Oberfläche (14) thermisch oder anodisch oder Plasma ist.

**19.** Verfahren gemäss einem der Ansprüche 15 bis 18, umfassend die folgenden Schritte:

- Herstellung eines spiralförmigen auf sich selbst gewickelten Federblatts aus Silizium, wobei das Federblatt eine Oberfläche umfasst, sogenannte oxidierbare Oberfläche, in Kontakt mit der Luft, wobei das Federblatt so geformt ist, dass die Fläche der oxidierbaren Oberfläche mindestens dem 1,1-fachen der Fläche einer geradlinigen konvexen Hülle (50) des Federblatts entspricht, vorzugsweise mindestens dem 1,5-fachen der Fläche der geradlinigen konvexen Hülle,

- Oxidation der oxidierbaren Oberfläche (1).

## Claims

1. Silicon spiral spring (1) for a mechanical watch comprising through and/or blind holes (10), the number of said holes (10) being higher than 500, said silicon spiral spring (1) having a height (h) greater than or equal to 100 $\mu$m.

2. The spiral spring of claim 1, the number of said holes (10) being higher than 1000.

3. The spiral spring according to one of claims 1 or 2, the lateral surface of said holes being substantially perpendicular to the mouth of said holes.

4. The spiral spring according to one of claims 1 or 2, the lateral surface of said holes being non-perpendicular to the mouth of said holes.

5. The spiral spring according to one of claims 1 to 4, the spring comprising a silicon blade wound on itself in the form of a spiral, the blade comprising a surface, named oxidisable surface, in contact with the air, **characterized in that** the blade is shaped so that the area of the oxidisable surface is at least 1,1 times the area of a rectilinear convex hull (50) of the blade, preferably at least 1,5 times the area of the rectilinear convex hull.

6. The spiral spring according to one of claims 1 to 5, comprising a silicon blade wound on itself, said blade comprises two flanks (30, 32), a lower surface (40) and an upper surface (42), each of said two side surfaces (30,32) and/or said lower surface (40) and/or said upper surface (42) comprising a nonplanar oxidized surface (14).

7. The spiral spring according to one of claims 1 to 6, the mouth of said holes (10) belonging at least to the upper surface (42) of said spiral spring (1).

8. The spiral spring according to one of claims 1 to 7, said holes (10) being periodically positioned.

9. The spiral spring according to one of claims 1 to 8, said silicon being a silicon having an orientation of {111} type.

10. The spiral spring according to one of claims 1 to 9, said silicon being a bulk silicon.

11. The spiral spring according to one of claims 1 to 10, said holes (10) being substantially aligned.

12. The spiral spring according to one of claims 1 to 11, each of said holes (10) having an oblong shape.

13. The spiral spring according to one of claims 1 to 12, having a thickness (e) greater than or equal to 30 $\mu$m.

14. Mechanical watch comprising a spiral spring (1) according to one of claims 1 to 13.

15. A method of manufacturing a silicon spiral spring (1) for a mechanical watch, **characterized in that** it comprises the following steps:

    - making in the silicon spiral spring (1) of through and/or blind holes (10), the number of said holes (10) being greater than 500, preferably greater than 1000, said silicon spiral spring (1) having a height (h) greater than or equal to 100 $\mu$m,
    - oxidation of said spring (1).

16. The method of claim 15, said holes (10) being made by photolithography and etching when said spiral spring (1) is made.

17. The method of claim 15, said holes (10) being made by photolithography and etching and/or laser after said spiral spring (1) is made.

18. The method according to one of claims 15 to 17, said oxidation of said surface (14) being thermal or anodic or plasma.

**19.** The process according to one of claims 15 to 18, comprising the following steps:

- making of a silicon blade wound on itself in a spiral shape, the blade comprising a surface, called oxidisable, in contact with air, the blade being shaped so that the area of the oxidisable surface is at least equal to 1,1 times the area of a rectilinear convex hull of the blade, preferably at least equal to 1.5 times the area of the rectilinear convex hull,
- oxidation of the oxidisable surface (1).

Fig. 1

Fig. 2

EP 2 707 777 B1

Fig. 3

Fig. 4

Fig. 5

Fig. 6

Fig. 7

14

**EP 2 707 777 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1422436 A
- EP 2151722 A
- CH 700653
- EP 2184652 A
- EP 2407831 A